# EUROPEAN PATENT SPECIFICATION

(11) **EP 2 670 542 B1**
(45) Date of publication and mention of the grant of the patent: **07.10.2020**
(21) Application number: 12741477.9
(22) Date of filing: 30.01.2012
(51) Int. Cl.: F28F 1/38

(54) **METHOD OF FABRICATING A DOUBLE-NOSED TUBE FOR A HEAT EXCHANGER**
VERFAHREN ZUR HERSTELLUNG EINES DOPPELSPITZENROHRS FÜR EINEN WÄRMETAUSCHER
PROCÉDÉ DE FABRICATION DE TUBE À DOUBLE NEZ POUR ÉCHANGEUR DE CHALEUR

(30) Priority: 31.01.2011 US 201161437781 P
(43) Date of publication of application: 11.12.2013
(73) Proprietor: MAHLE International GmbH, 70376 Stuttgart (DE)
(72) Inventor: KUNZ, Marcin, PL-63-500 Ostrzeszow (PL); ZYWICA, Lukasz, PL-63-430 Tarchaly Wielkie (PL)
(74) Representative: BRP Renaud & Partner mbB Rechtsanwälte Patentanwälte Steuerberater
(86) International application number: PCT/US2012/023109
(87) International publication number: WO 2012/106242

(56) References cited:
- EP-A1- 1 941 954
- CN-U- 201 555 486
- DE-A1-102006 054 814
- GB-A- 2 324 145
- US-A- 5 441 106
- US-B1- 6 209 202
- US-B2- 6 615 488

## Description

### TECHNICAL FIELD OF INVENTION

The present invention relates to a method of fabricating a tube for heat exchanger; particularly, to a method of fabricating a folded tube for a heat exchanger.

A method of this kind is disclosed in GB 2 324 145 A. This method comprises the steps of: providing a strip of heat conductive material having a first surface and a second surface, wherein said strip of heat conductive material extends along an A-axis; progressively forming said strip at a series of stations to plastically deform said strip to form a pair of corrugations about the A-axis, each of said pair of corrugations being provided on either sides of the A-axis and including a series of alternating crests and web segments; creating a first fold by folding said corrugations inward toward said second surface forming a pair of folded corrugations, wherein each of said pair of folded corrugations defines a central wall along said first fold; creating a second fold by folding said pair of folded corrugations inward toward said second surface such that said central walls are tightly abutted against each other. Similar methods are disclosed in EP 1 941 954 A1, CN 201 555 486 U and US 5 441106 A. From DE 10 2006 054814 A1 it is known another method for providing heat exchanger tubes with a pair of double noses from a single strip of material.

### BACKGROUND OF INVENTION

A heat exchanger assembly such as a radiator, condenser, or evaporator for use in a motor vehicle typically includes an inlet header, an outlet header, a plurality of tubes hydraulically connecting the headers for fluid flow therebetween, and external fins interconnecting the tubes. The headers, tubes, and fins are typically assembled into a unitary structure and brazed to form the heat exchanger assembly.

A first heat transfer fluid, such as a liquid coolant or a two-phase refrigerant, flows from the inlet header to the outlet header through the plurality of tubes. The first heat transfer fluid is in contact with the interior surfaces of the tubes while a second heat transfer fluid, such as ambient air, is in contact with the exterior surfaces of the tubes. Where a temperature difference exists between the first and second fluids, heat is transferred from the higher temperature fluid to the lower temperature fluid through the walls of the tubes. Internal fins are provided within the passageways of the tubes to increase the surface area available for heat transfer, as well as to increase the structural integrity of the tubes. The internal fins extend substantially the length of the tubes and define a plurality of channels or ports for the flow of a heat transfer fluid from one header to the other.

Heat exchanger tubes having a plurality of channels are also known as multi-port tubes. A known method of manufacturing multi-port tubes is by extruding a billet of deformable heat conductive material through a die. The extrusion process allows for the formation of the internal fins to have intricate geometric features to improve heat transfer efficiency that other known manufacturing process could not readily provide. However, the extrusion process is known to be expensive because of the need to frequently replace the extrusion die in order to maintain the desired dimensions of the intricate geometric features. Extruded tubes are also prone to corrosion attacks from road salt and acidic rain and require extensive corrosion inhibition coatings for motor vehicle applications, which add to the complexity of manufacturing and cost.

Another known method of forming multi-port tubes is by folding a sheet of pliable heat conductive material. Typically, a flat elongated sheet of metallic material is folded to form a tube having multiple ports defined by the internal corrugated folds. The internal corrugated folds form the internal fins that define the shape and size of the ports. Folded tubes provide numerous advantages over extruded tubes in terms of lower cost and ease of manufacturing for the tube itself as well as for the final assembly of the heat exchanger. One advantage is that a folded tube can be formed from a thin sheet of clad aluminum, which offers superior corrosion protection without the need for applying additional coatings.

However, a shortcoming of a fold tube is that the leading nose of the folded tube is prone to damage since the thickness, or gage, of the leading nose is the same as that of the thin sheet of clad aluminum material that the folded tube is fabricated from. The leading nose of the tube is typically oriented toward the front of the motor vehicle and exposed to incoming air for increase heat transfer efficiency as the vehicle moves in the forward direction. In this configuration, the leading nose is susceptible to impact damage from road hazards such as rocks and debris, as well as corrosion damage from environmental hazards such as acidic rain, road salt, and wind friction.

Based on the foregoing, there is a need for a folded tube that is robust, resistant to impact damage from road hazards, resistant to corrosion from environmental hazards, and cost economical to manufacture.

### SUMMARY OF INVENTION

A method of forming a heat exchanger tube according to claim 1 is provided.

The double nose of the tube provides additional protection against the impact of road debris as well as providing additional material to guard against the corrosive effects of the harsh environment. Furthermore, the method offers the advantage of a tight center seam, as well as a tight seam between the internal nose and external nose that is amendable to brazing.

### BRIEF DESCRIPTION OF DRAWINGS

Fig. 1 shows a perspective view of a prior art heat exchanger having folded tubes extending between two headers.
Fig. 2 shows a cross section of a prior art single nosed folded tube.
Fig. 3 shows a perspective view of a unitary strip of heat conductive material extending along a longitudinal axis A.
Figs. 4-8 show perspective views of the intermediate stages in the formation of a double nosed folded tube in accordance with the method of the invention.
Fig. 4A shows a detail view of an edge of a corrugation having a folded portion that defines the interior nose of the double nosed tube.
Fig. 9 shows a perspective view of a cross-section of the double nosed tube made in accordance with the method of the invention.
Fig. 9A shows a detailed partial cross-section of the double nose of Fig. 9.

### DETAILED DESCRIPTION OF INVENTION

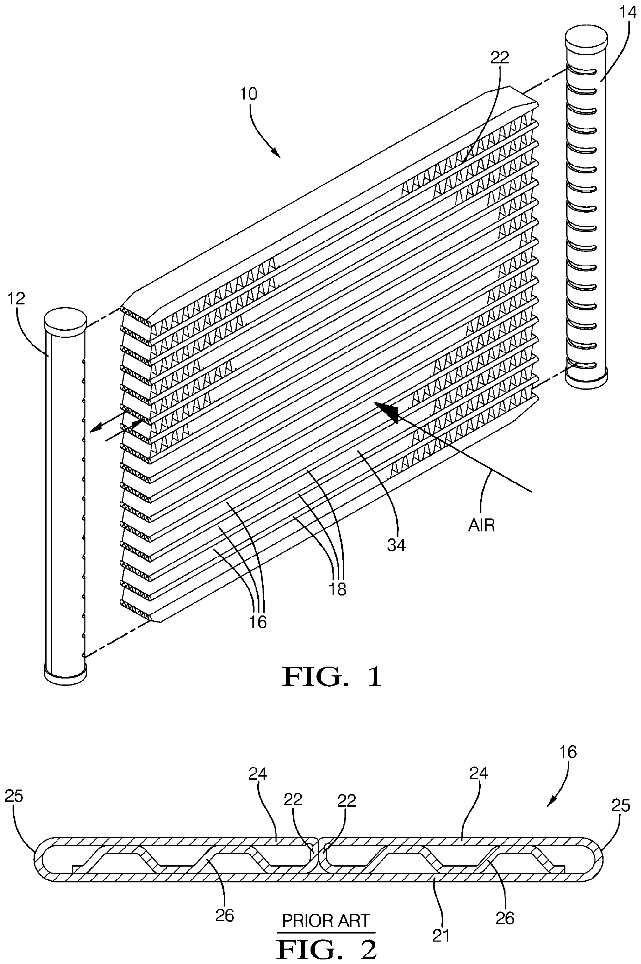

Referring to Fig. 1 is a perspective view of an exemplary heat exchanger assembly 10 having a plurality of folded tubes 16 extending between a first header 12 and a second header 14. The fold tubes 16 are in hydraulic connection with the first and second headers 12, 14 for fluid flow therebetween. The heat exchanger assembly 10 may be that of a condenser for the condensing of a two phase refrigerant, a radiator for the dissipation of heat from a coolant that is circulated through a hot internal combustion engine, or any other heat exchanger having folded tubes 16 that is typically found in a motor vehicle.

For improved heat transfer efficiency, it is desirable to expose the forward face 34 of the heat exchanger assembly 10 to a stream of oncoming ambient air; therefore, the heat exchanger assembly 10 is typically housed within the front engine compartment of a motor vehicle. Each of the folded tubes 16 is substantially flat and includes a front edge 18, which is commonly referred to as the nose 18, oriented in the direction of the on-coming air stream. As the motor vehicle travels forward, a stream of ambient air impinges on the forward nose 18 of the folded tube 16 before flowing around the side walls of the folded tube 16. In this position, the forward nose 18 of the folded tube 16 may be susceptible to impact from road debris such as small pebbles and exposure to corrosive materials such as road salt. Over time, the friction of the on-coming air, impact of the road debris, and the corrosive effect of the road salt may damage and/or erode the forward nose 18 resulting in the leakage of refrigerant or coolant from the heat exchanger assembly 10. The present invention provides a method of manufacturing a double nosed tube, which increases the robustness of the leading edge 18 of the folded tube 16 to improve impact and corrosion resistance.

The basic fabrication step of fabricating folded tube 16 are known to those skilled in the tube fabricating art, and may be found in co-assigned U.S. Pat. No. 6,615,488. Any shape of the folded tube's cross-section can be produced by providing progressive form rollers of suitable shape. Shown in Fig. 2 is a "B" shape folded tube 16 known in the art. The folded tube 16 desired features are built into the progressive form rollers in a manner familiar to those skilled in the art. A first set of rollers progressively bend the outermost edges of a sheet of heat conductive material forming corrugations 26, then subsequent rollers continue to bend the corrugations 26 to form the bottom wall 21, two central walls 22, two top walls 24, and opposing single walled noses 25. The final set of rollers folds the top walls down 24, thereby abutting the central walls 22 and sandwiching the corrugations 26 between the top walls 24 and the bottom wall 21, thereby creating the basic "B" shape folded tube 16 shown in Fig. 2. Once the basic "B" shape folded tube 16 is completed, the folded tubes 16 are cut to the desired length, assembled with the other components of the heat exchanger assembly, and brazed to form a complete heat exchanger assembly.

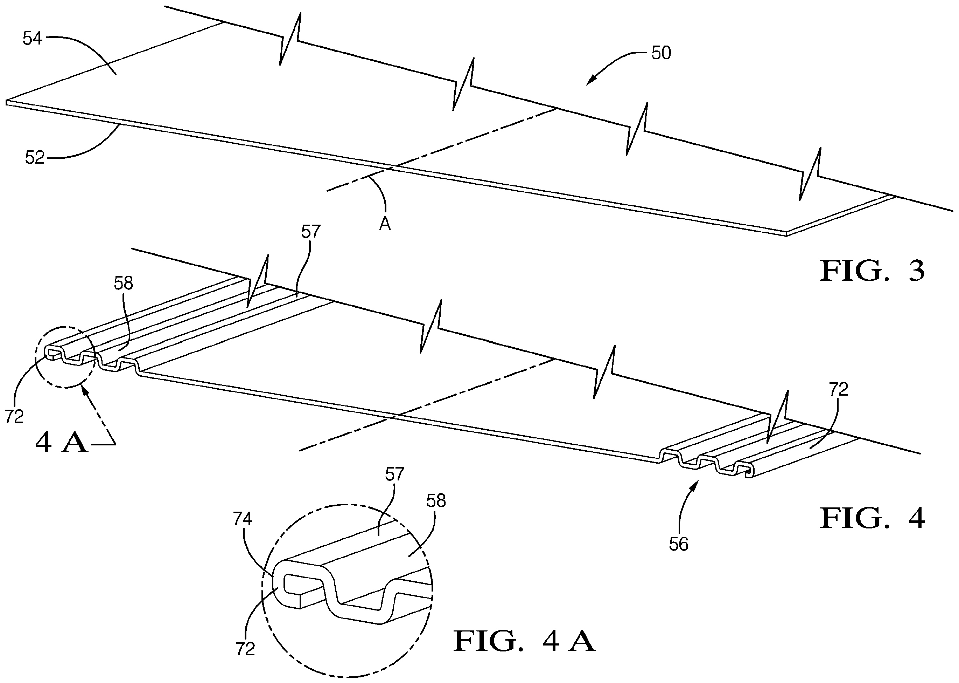

While the basic tube formation technique and braze process are known, what is novel is the particular combination of structural features of the double nosed tube that enables the improved performance of the otherwise standard fabrication and braze process. Shown in Fig. 3 is a is a perspective view of an elongated strip of heat conductive material 50, preferably a continuous clad aluminum strip 50, having a first surface 52 and an opposite second surface 54 extending along a longitudinal A-axis. For illustrative purposes, the first surface 52 is oriented in the downward direction and the second surface 54 is oriented in the upward direction with respect to the orientation of the figure. The strip 50 is longitudinally fed into a multi-station roll forming apparatus to symmetrically plastically deform the strip 50 to form a corrugation 56 having an internal nose 72 on either sides of the A-axis as shown in Fig. 4. Each of the corrugations 56 defines a series of alternating crests 57 and web segments 58 joining the adjacent crests 57. On ends of the corrugations 56 is the internal nose 72 defined by an outward extension, with respect to the axis A, of the outer most crest 57 followed by an inward curve of the edge of the strip 50 back toward the axis A. The internal nose 72 includes an exterior surface 74 defined by a portion of the second surface 54 along the inward curve.

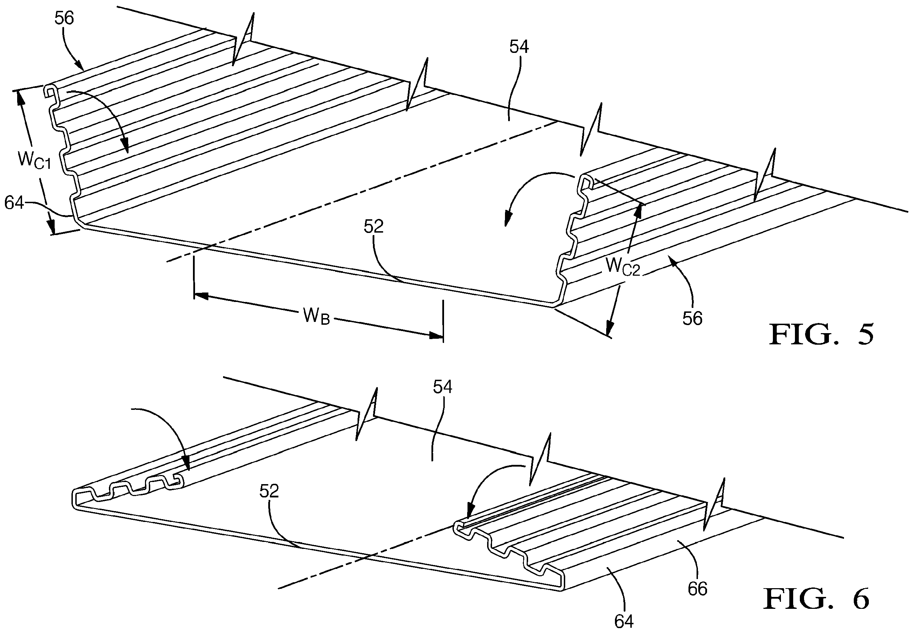

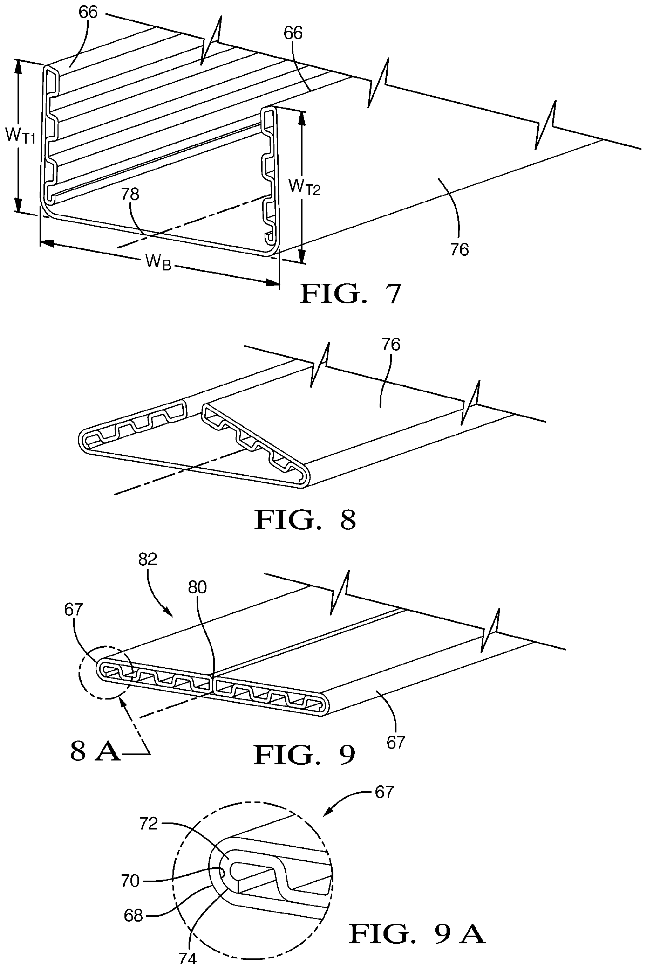

Shown in Figs. 5 and 6, the corrugations 56 are folded inward onto the second surface 54, thereby defining a central wall 64 along the transition of the fold. The central wall 64 includes an abutting surface 66 defined by a portion of the first surface 52 along the fold. Referring to Figs. 7 and 8, each of the folded corrugations 56, together with the portion of the strip that the corrugation 56 is folded onto, is folded again toward the second surface 54 such that the abutting surfaces 66 of the central walls 64 are tightly pressing against each other, thereby defining a "B" shape double nosed tube 82 having a pair of opposing double noses 67. Referring to Figs. 9 and 9A, each of the pair of double noses 67 includes an external nose 68 having an interior surface 70 and an internal nose 72 having an exterior surface 74. The exterior surface 74 of the internal nose 72 is urged against the interior surface 70 of the external nose 68 thereby forming a tight seam that is amendable to brazing.

Referring back to Fig. 7, the sum of the pre-stressed width (W_{T1}, W_{T2}) of the two top walls 76 is greater than the width (W_{B}) of the bottom wall 78, such that when the two top walls 76 are completely folded over, the seam 80 defined by the abutting surfaces 66 of the center walls 64 is sufficiency tight to self-maintain the shape of the "B" shape double nosed tube 82 upon the final step of the folding process.

Referring back to Fig. 5, each of the corrugations 56 includes a pre-stressed width (W_{C1}, W_{C2}), in which the sum of the pre-stress widths is greater than the width of the bottom wall (W_{B}) shown in Fig. 7, such that when the two top walls 76 are completely folded over, the tightly abutting center walls 64 cooperates with the interior surfaces 70 of the exterior noses 68 to compress the corrugations 56 therebetween, in which the corrugations 56 behave as a compressed spring thereby urging the exterior surface 74 of the internal nose 72 tightly against the interior surface 70 of the external nose 68 of the double nosed folded tube 82 . The biasing of the two central walls 64 together results in the biasing of the internal nose 72 against the exterior nose 68 of the tube. In other words, the corrugations 56 behave as compressed springs that urge the two central walls 64 in tight abutment with each other and the internal noses 72 in tight abutment with the exterior noses 68.

Once the basic "B" shape double nosed folded tube 82 is completed, the tubes 82 are cut to the desired length, assembled with the other components of the heat exchanger assembly, and brazed to form a complete heat exchanger assembly.

The method of fabricating a folded tube as disclosed herein provides a B-shape double nosed folded tube 82 that has a nose thickness that is doubled the thickness of that of the thickness of the strip of material that the tube is folded from. The leading double nose of the tube provides additional protection against the impact of road debris as well as providing additional material to guard against the corrosive effects of the harsh environment. Furthermore, the method offers the advantage of a tight center seam as well as a tight seam between the internal nose and external nose that is amendable to brazing.

While this invention has been described in terms of the preferred embodiments thereof, it is not intended to be so limited, but rather only to the extent set forth in the claims that follow. It should be appreciated that one of ordinary skill in the art recognizes that the terms "bottom", "upper", and "horizontal" are arbitrary, as the folded tube could be in any orientation. Likewise, the central walls need not be exactly in the center of the width of the cross section, but typically will be.

## Claims

1. A method of forming a heat exchanger tube, comprising the steps of:
providing a strip (50) of heat conductive material having a first surface (52) and a second surface (54), wherein said strip (50) of heat conductive material extends along an A-axis;
progressively forming said strip (50) at a series of stations to plastically deform said strip (50) to form a pair of corrugations (56) about the A-axis, each of said pair of corrugations (56) being provided on either sides of the A-axis and including a series of alternating crests (57) and web segments (58), wherein each of said pair of corrugations (56) defines an internal nose (72), wherein said internal nose (72) is defined by an outward extension, with respect to the A-axis, of the outer most crest (57) followed by an inward curve back towards the A-axis;
creating a first fold by folding said corrugations (56) inward toward said second surface (54) forming a pair of folded corrugations (56), wherein each of said pair of folded corrugations (56) defines a central wall (64) along said first fold; and
creating a second fold by folding said pair of folded corrugations (56) inward toward said second surface (54) such that said central walls (64) are tightly abutted against each other, and such that said internal noses (72) are abutted up against a respective portion of said second surface (54) along said second fold defining a pair of double noses (67), thereby forming a "B" shaped double nosed folded tube (82) having two top walls (24) and a bottom wall (21).

2. The method of forming a heat exchanger tube of claim 1, wherein each of said pair of double noses (67) includes an external nose (68) having an interior surface (70),
wherein each of said internal noses (72) include an exterior surface (74) defined by a portion of said second surface (54),
wherein each of said corrugations (56) includes a pre-stressed width W_{C1}, W_{C2}, and bottom wall (21) includes a width W_{B}, and
wherein the sum of said pre-stress widths of said corrugations (56) is greater than said width of said bottom wall (21) W_{B}, such that when said folded corrugations (56) are completely folded inward, said tightly abutting said center walls (64) cooperate with said interior surfaces (70) of said exterior noses (68) to compress said corrugations (56) therebetween, in which the corrugations (56) behave as a compressed spring thereby urging the exterior surface (74) of said internal nose (72) tightly against the interior surface (70) of said external nose (68).

3. The method of forming a heat exchanger tube of claim 1,
wherein each of said two top walls (24) includes a pre-stressed width W_{T1}, W_{T2}, and bottom wall (21) includes a width W_{B},
wherein the sum of said pre-stressed width of said top walls (24) is greater than said width W_{B} of said bottom wall (21), such that when said two top walls (24) are completely folded inward, a seam (80) defined by said abutting center walls (64) is sufficiency tight to self-maintain said shape of said double nosed folded tube (82).

## Patentansprüche

1. Verfahren zur Bildung eines Wärmetauscherrohrs, umfassend die Schritte zum:
Bereitstellen eines Streifens (50) aus wärmeleitfähigem Material, das eine erste Oberfläche (52) und eine zweite Oberfläche (54) aufweist, wobei der Streifen (50) aus wärmeleitfähigem Material sich entlang einer A-Achse erstreckt;
schrittweises Bilden des Streifens (50) bei einer Reihe von Stationen, um den Streifen (50) plastisch zu verformen, um ein Paar von Rillen (56) um die A-Achse zu bilden, wobei jedes Paar von Rillen (56) an beiden Seiten der A-Achse bereitgestellt ist und eine Reihe abwechselnder Scheitel (57) und Stegsegmente (58) beinhaltet,
wobei beide des Paars von Rillen (56) eine Innennase (72) definieren, wobei die Innennase (72) durch eine Erweiterung nach außen in Bezug auf die A-Achse des äußersten Scheitels (57) gefolgt von einer Kurve nach innen, zurück zu der A-Achse, definiert ist;
Erzeugen eines ersten Falzes durch Falten der Rillen (56) nach innen, zu der zweiten Oberfläche (54), die ein Paar gefalteter Rillen (56) bildet, wobei beide des Paares gefalteter Rillen (56) eine Mittelwand (64) entlang des ersten Falzes bilden; und
Erzeugen eines zweiten Falzes, indem das Paar gefalteter Rillen (56) nach innen, zu der zweiten Oberfläche (54) gefaltet wird, sodass die Mittelwände (64) eng aneinander anliegen und sodass die Innennasen (72) an einem jeweiligen Abschnitt der zweiten Oberfläche (54) entlang des zweiten Falzes anliegen, um ein Paar von Doppelnasen (67) zu definieren, wodurch ein "B"-förmiges doppelnasiges gefaltetes Rohr (82) gebildet wird, das zwei Oberseitenwände (24) und eine Bodenwand (21) aufweist.

2. Verfahren zum Bilden eines Wärmetauscherrohrs nach Anspruch 1,
wobei beide des Paares von Doppelnasen (67) eine Außennase (68) beinhalten, die eine Innenoberfläche (70) aufweist,
wobei beide der Innennasen (72) eine Außenoberfläche (74) beinhalten, die durch einen Abschnitt der zweiten Oberfläche (54) definiert ist,
wobei beide der Rillen (56) eine vorgespannte Breite W_{C1}, W_{C2} beinhalten und die Bodenwand (21) eine Breite W_{B} beinhaltet, und
wobei die Summe der Vorspannbreiten der Rillen (56) größer als die Breite der Bodenwand (21) W_{B} ist, sodass, wenn die gefalteten Rillen (56) vollständig nach innen gefaltet sind, sie eng an den Innenwänden (64) anliegend mit den Innenoberflächen (70) der Außennasen (68) zusammenwirken, um die Rillen (56) dazwischen zu komprimieren, in denen die Rillen (56) sich als komprimierte Feder verhalten, wodurch die Außenoberfläche (74) der Innennase (72) eng an die Innenoberfläche (70) der Außennase (68) gepresst wird.

3. Verfahren zum Bilden eines Wärmetauscherrohrs nach Anspruch 1,
wobei beide der zwei Oberseitenwände (24) eine vorgespannte Breite W_{T1}, W_{T2} beinhalten und die Bodenwand (21) eine Breite W_{B} beinhaltet,
wobei die Summe der vorgespannten Breite der Oberseitenwände (24) größer als die Breite W_{B} der Bodenwand (21) ist, sodass, wenn die zwei Oberseitenwände (24) vollständig nach innen gefaltet sind, ein Saum (80), der durch die anliegenden Mittelwände (64) definiert ist, ausreichend eng ist, um die Form des doppelnasigen gefalteten Rohrs (82) selbständig beizubehalten.

## Revendications

1. Procédé de formation d'un tube d'échangeur de chaleur, comprenant les étapes consistant à :
fournir une bande (50) de matériau conducteur de chaleur ayant une première surface (52) et une seconde surface (54), dans lequel ladite bande (50) de matériau conducteur de chaleur s'étend le long d'un axe A ;
former progressivement ladite bande (50) au niveau d'une série de postes pour déformer plastiquement ladite bande (50) afin de former une paire d'ondulations (56) autour de l'axe A, chacune de ladite paire d'ondulations (56) étant prévue de chaque côté de l'axe A et incluant une série de crêtes (57) et de segments d'âme (58) en alternance,
dans lequel chacune de ladite paire d'ondulations (56) définit un nez intérieur (72), dans lequel ledit nez intérieur (72) est défini par une extension vers l'extérieur, par rapport à l'axe A, de la crête la plus extérieure (57) suivie par une courbe vers l'intérieur en arrière vers l'axe A ;
créer un premier pli en pliant lesdites ondulations (56) vers l'intérieur vers ladite seconde surface (54) en formant une paire d'ondulations pliées (56), dans lequel chacune de ladite paire d'ondulations pliées (56) définit une paroi centrale (64) le long dudit premier pli ; et
créer un second pli en pliant ladite paire d'ondulations pliées (56) vers l'intérieur vers ladite seconde surface (54) de telle sorte que lesdites parois centrales (64) soient étroitement en butée l'une contre l'autre, et de telle sorte que lesdits nez intérieurs (72) soient en butée contre une partie respective de ladite seconde surface (54) le long dudit second pli définissant une paire de nez doubles (67), en formant ainsi un tube plié à nez doubles en forme de « B » (82) ayant deux parois supérieures (24) et une paroi inférieure (21).

2. Procédé de formation d'un tube d'échangeur de chaleur selon la revendication 1,
dans lequel chacun de ladite paire de nez doubles (67) inclut un nez extérieur (68) ayant une surface intérieure (70),
dans lequel chacun desdits nez intérieurs (72) inclut une surface extérieure (74) définie par une partie de ladite seconde surface (54),
dans lequel chacune desdites ondulations (56) inclut une largeur précontrainte W_{C1}, W_{C2}, et la paroi inférieure (21) inclut une largeur W_{B}, et
dans lequel la somme desdites largeurs de précontrainte desdites ondulations (56) est supérieure à ladite largeur de ladite paroi inférieure (21) W_{B}, de telle sorte que lorsque lesdites ondulations pliées (56) sont complètement pliées vers l'intérieur, lesdites parois centrales (64) venant en butée de manière étroite coopèrent avec lesdites surfaces intérieures (70) desdits nez extérieurs (68) pour comprimer lesdites ondulations (56) entre elles, dans lequel les ondulations (56) se comportent comme un ressort comprimé en poussant ainsi la surface extérieure (74) dudit nez intérieur (72) fermement contre la surface intérieure (70) dudit nez extérieur (68).

3. Procédé de formation d'un tube d'échangeur de chaleur selon la revendication 1,
dans lequel chacune desdites deux parois supérieures (24) inclut une largeur précontrainte W_{T1}, W_{T2}, et la paroi inférieure (21) inclut une largeur W_{B},
dans lequel la somme de ladite largeur précontrainte desdites parois supérieures (24) est supérieure à ladite largeur W_{B} de ladite paroi inférieure (21), de telle sorte que lorsque lesdites deux parois supérieures (24) sont complètement pliées vers l'intérieur, une jonction (80) définie par lesdites parois centrales venant en butée (64) est suffisamment étanche pour auto-maintenir ladite forme dudit tube plié à double nez (82).
